# EUROPEAN PATENT APPLICATION

(11) **EP 0 931 442 A1**
(43) Date of publication of application: **28.07.1999**
(21) Application number: 99200059.6
(22) Date of filing: 12.01.1999
(51) Int. Cl.: A01C 15/00

(54) **A fertilizer spreader**

(30) Priority: 15.01.1998 NL 1008034
(71) Applicant: Kverneland Nieuw-Vennep B.V., 2153 LR Nieuw-Vennep (NL)
(72) Inventor: Mijnders, Gijsbert Jan, 2161 KE Lisse (NL)
(74) Representative: de Vries, Johannes Hendrik Fokke

(57) **Abstract**

A fertilizer spreader is provided with a substantially funnel-shaped container comprising a bottom and at least one outlet opening present therein, with a spreading element disposed under said outlet opening, and with a stirring unit disposed in said container. The stirring unit is provided with a hub comprising a plurality of projecting stirring fingers. The hub is freely rotatable about a first shaft which is eccentrically, non-rotatable fixed on a second shaft, which can be rotatably driven. The operating area of the stirring unit is located some distance above the bottom in a funnel-shaped flaring part of the container.

## Description

The invention relates to a fertilizer spreader provided with a substantially funnel-shaped container comprising a bottom and at least one outlet opening present therein, with a spreading element disposed under said outlet opening and with a stirring unit disposed in said container, which stirring unit is provided with a hub comprising a plurality of projecting stirring fingers, which hub is freely rotatable about a first shaft which is eccentrically, non-rotatably fixed on a second shaft, which can be rotatably driven.

A fertilizer spreader of this type is known, for example from DE-A-36 37 045. With this known fertilizer spreader, a hood is mounted above the stirring unit in the funnel-shaped container, which hood functions to prevent fertilizer present in the container from exerting pressure on the fertilizer which is present at the location of the stirring unit. Nevertheless, with the known fertilizer spreader there may be a problem of the stirring unit damaging the manure, especially when no fertilizer is being delivered via the outlet opening for a short period, as a result of which so much heat is generated that a solid mass of fertilizer is formed, which interferes with the outflow of the fertilizer, possibly even preventing said outflow altogether.

The objective of the invention is to provide a fertilizer spreader of the kind referred to in the introduction, wherein this drawback has been overcome in a simple yet efficient manner.

In order to accomplish that objective, the fertilizer spreader according to the invention is characterized in that the operating area of the stirring unit is located at some distance above the bottom in a funnel-shaped flaring part of the container.

The invention is based on the insight that it is not necessary to position the operating area of the stirring unit as closely to the outlet opening as possible in order to achieve a satisfactory delivery of the fertilizer via the outflow opening. By consciously opting for an operating area of the stirring unit some distance above the bottom, it is achieved that a layer of undamaged fertilizer which cannot be damaged by the stirring unit will be present at the location of the outlet opening at all times, also when the delivery of fertilizer is temporarily interrupted. The flow of fertilizer will be resumed when the outlet opening is opened again. Since the stirring unit is operative in an area some distance above the bottom, the fertilizer can be loosened more easily by the stirring fingers at this location, and the operation of the stirring unit will cause any damaged fertilizer to sink into the layer of fertilizer that is present between the stirring unit and the bottom, so that no coagulated mass of fertilizer will be formed at the location of the operating area of the stirring unit.

According to one advantageous embodiment of the invention, the hub is positioned some distance above the bottom, and the stirring fingers extend from the hub into the container in a direction away from the bottom.

In this manner it is possible to form a stirring unit, whose operating area is located the desired distance from the bottom, by providing a second shaft which extends only a small distance upwards from the bottom.

The invention will be explained in more detail hereafter with reference to the drawing, which very schematically shows an embodiment of the fertilizer spreader according to the invention.

Fig. 1 is a schematic sectional view/side view of a part of an embodiment of the fertilizer spreader according to the invention.

Fig. 2 is a plan view of the bottom part of the fertilizer spreader of Fig. 1.

Fig. 3 is a side view of the spreading element and of the stirring unit of the fertilizer spreader of Fig. 1.

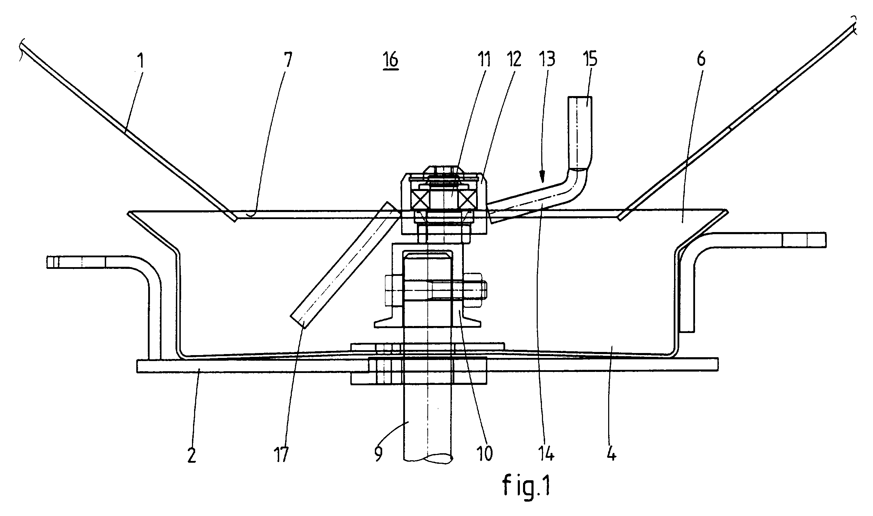

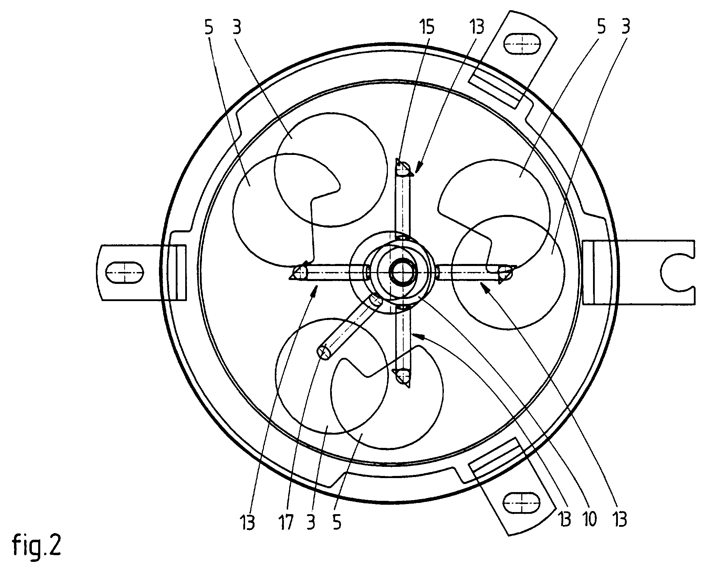

Fig. 1 shows a part of a fertilizer spreader, which is provided with a substantially funnel-shaped container 1, which is shown only partially. Container 1 comprises a fixed bottom plate 2, in which three circular outlet openings 3 (see Fig. 2) are present. Bottom plate 2 supports a cylinder 4, whose bottom 3 is provided with profiled openings 5, which can be aligned with outlet openings 3 by rotating cylinder 4 to a greater or lesser extent so as to adjust the metering by the fertilizer spreader. As is shown in Fig. 1, cylinder 4 comprises an outwardly extending end edge 6 at its upper side, which surrounds the open underside 7 of container 1. In practice, the opening between end edge 7 and the outer wall of container 1 is closed by a rubber sealing ring, which is not shown in the drawing. It is noted that the above-described construction of the fertilizer spreader is known per se, it does not form part of the subject matter of the invention.

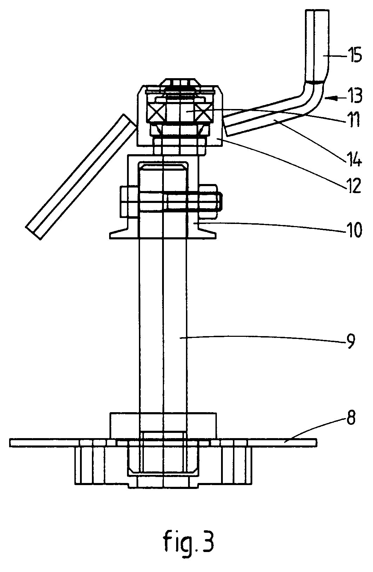

The fertilizer spreader is provided with an intermediate plate 8 as shown in Fig. 3, under which a spreading element can be mounted, possibly via an extended shaft. Intermediate plate 8 can be rotated via a shaft 9, in a manner known per se, at a variable speed in dependence on the desired spreading range. A shaft 11 is fixed eccentrically on the end of shaft 9 that extends upwards into cylinder 4 by means of a mounting bush 10. A hub 12 is mounted on shaft 11 in such a manner that it can rotate freely by means of a schematically indicated ball bearing. Hub 12 is provided with four stirring fingers 13, which are each hook-shaped and which comprise a first part 14, which slopes upwards from hub 12 in a direction away from bottom plate 2, and a second part 15 contiguous thereto, which extends substantially axially, i.e. parallel to shaft 9, upwards into container 1. Said axial parts 15 comprise an end portion of triangular cross-section, one surface of which extends obliquely to the radial direction. Hub 12 and stirring fingers 13 together provide a stirring unit, by means of which the fertilizer in container 1 is loosened, so that an even outflow of fertilizer via outlet openings 3 to intermediate plate 8 is ensured. Said stirring unit 12, 13 is driven by the drive gear of shaft 9 (not shown). Since shaft 11 is disposed eccentrically with respect to shaft 9, hub 12 will move in a circular path. Due to the mounting of the hub 12 on the shaft 11 in a freely rotatable manner, the hub 12 can be stationary with respect to this shaft, so that the hub 12 with the stirring fingers 13 does not rotate. When the container 1 is filled with fertilizer, the stirring fingers 13 are pressed into the fertilizer by the eccentric movement of hub 12, and hub 12 is caused to rotate about shaft 11 as a result of the presence of the oblique surfaces on the end portions of the stirring fingers 13. The number of revolutions of stirring unit 12, 13 is much smaller than the number of revolutions of intermediate plate 8 and shaft 9, respectively. The number of revolutions of shaft 9 can vary from 540 upto 950 depending on the type of fertilizer spreader, wherein the number of revolutions of the stirring unit 12, 13 will vary from about 30 upto 80.

As shown in fig. 1, the operating area of the stirring unit 12, 13 is located some distance above the bottom plate 2 in an area of the container 1 which flares outwardly like a funnel. This is obtained in the described fertilizer in that hub 12 is located some distance above the bottom plate 2 which has the same order of magnitude as the length of the axial parts 15 of the stirring fingers 13. The hub 12 is located substantially at the height of the end edge 7 of the container 1. Thereby, the operating area does not extend further in height direction as necessary for loosening the fertilizer streaming towards.

When the container 1 is completely filled with fertilizer, a relatively high pressure is exerted on the oblique surfaces of the stirring unit 12,13, whereby the stirring unit is driven with maximal number of revolutions. In view of the high supply of fertilizer this effect is desired. With a decreasing amount of fertilizer, the pressure decreases and thereby the number of revolutions also. When the outlet openings 3 are fully open, the discharge speed is high and the pressure is low so that the stirring unit 12,13 is driven with minimal number of revolutions. In this manner any unnecessary damage to the fertilizer is prevented at a high flow.

According to an alternative embodiment the axial parts 15 are provided with a surface oblique to the radial direction only and the side of the axial parts 15 leading in rotational direction is rounded, so that the stirring unit 12,13 when rotating meets less resistance from the fertilizer.

In the described fertilizer spreader, it is important that the operating area of stirring unit 12, 13 is located some distance above bottom plate 2, to wit in an area of the container which is funnel-shaped and flaring. This minimizes the amount of damage which is done to the fertilizer by stirring fingers 13 and hub 12. The stirring fingers 13 can be pressed into the fertilizer relatively easily, since the fertilizer can move out into the upwardly diverging container. Moreover, when the outlet openings 3 are closed temporarily, during which time the driving gear continues to operate, a layer of fertilizer will be present under the operating area of stirring unit 12, 13 at all times, into which any fertilizer that has been pulverized by the operation of the stirring unit can sink, so that there will be no formation of a coagulated fertilizer mass in said operating area. Furthermore, a proper flow of fertilizer will be started at all times when the outlet openings 3 are opened.

In the described embodiment, stirring unit 12, 13 is furthermore provided with an additional stirring finger 17, which extends obliquely towards bottom plate 2 from hub 12. Said additional stirring finger 17 acts to keep the fertilizer in loosened condition in the area below the operating area 16 of stirring unit 12, 13. Although only one additional stirring finger 17 is shown, it is also possible to provide two or more stirring fingers 17, if desired. Furthermore it is possible to use three stirring fingers 13, or more than four, rather than the four which are used in the illustrated embodiment.

The spacing between the central axis of shaft 9 and that of shaft 11 varies from 6-12 mm and is preferably at least approximately 9 mm. Tests have shown that a satisfactory stirring action is achieved by using the aforementioned spacing at the usual rotational speeds of intermediate plate 8, whilst minimizing the amount of damage to the fertilizer.

The invention is not limited to the above-described embodiment, which can be varied in several ways within the scope of the claims.

## Claims

1. Fertilizer spreader provided with a substantially funnel-shaped container comprising a bottom and at least one outlet opening present therein, with a spreading element disposed under said outlet opening and with a stirring unit disposed in said container, which stirring unit is provided with a hub comprising a plurality of projecting stirring fingers, which hub is freely rotatable about a first shaft which is eccentrically, non-rotatable fixed on a second shaft, which can be rotatably driven, **characterized in that** the operating area of the stirring unit is located some distance above the bottom in a funnel-shaped flaring part of the container.

2. Fertilizer spreader according to claim 1, wherein said hub is positioned some distance above the bottom, and wherein said stirring fingers extend from the hub into the container in a direction away from the bottom.

3. Fertilizer spreader according to claim 1 or 2, wherein at least three, preferably four, stirring fingers projecting from the hub into the container, in a direction away from the bottom, are provided in regularly spaced-apart relationship on the hub circumference.

4. Fertilizer spreader according to claim 1, 2 or 3, wherein said stirring fingers are each hook-shaped, wherein a first part slopes upwards from said hub in a direction away from the bottom, and wherein a second part, which is contiguous thereto, extends substantially vertically upwards into said container.

5. Fertilizer spreader according to claim 4, wherein the axial parts of the stirring fingers comprise a surface oblique with respect to the radial direction, while the side leading in rotational direction is rounded.

6. Fertilizer spreader according to claim 4 or 5, wherein the distance of the hub above the bottom has the same order of magnitude as the length of the axial part of the stirring fingers.

7. Fertilizer spreader according to claim 6, wherein the hub is located at the height of the end edge of the funnel-shaped container.

8. Fertilizer spreader according to any one of the preceding claims, wherein at least one stirring finger is provided, which extends from the hub towards the bottom.

9. Fertilizer spreader according to any one of the preceding claims, wherein the spacing between said first shaft and said second shaft is at least approximately 9 mm.
